# EUROPEAN PATENT APPLICATION

(11) **EP 2 451 148 A1**
(43) Date of publication of application: **09.05.2012**
(21) Application number: 10306213.9
(22) Date of filing: 05.11.2010
(51) Int. Cl.: H04N 5/268, H01R 13/66, H01R 31/06, H04B 10/12

(54) **Method and system for transmitting broadcast data**

(71) Applicant: Thomson Licensing, 92130 Issy-les-Moulineaux (FR)
(72) Inventor: Koppe, Rudolf, 4817 NB, Breda (NL); UijtdeHaag, 4702 AT, Roosendaal (NL)
(74) Representative: Lindemann, Robert

(57) **Abstract**

In accordance with an exemplary embodiment of the present invention, a system (200) is provided to process multimedia data. The system (200) includes a base station (202) and a conversion box (210). The base station (202) may be equipped and configured to generate a transmission signal comprising multimedia data. The transmission signal may be based on a first cable (208, 228). The base station (202) may also be equipped and configured to exchange the multimedia data with a signal source (214) using the conversion box (210, 410). The conversion box (210) may be equipped and configured to connect the first cable (208, 228)) to a second cable (208, 228). The system (200) is characterized in that the conversion box (210) is configured to route the transmission signal to the second cable (208, 228). The transmission signal is generated based on a signal processing system (218) for the second cable (208, 228).

## Description

The present invention relates to the field of transmitting video data. In particular, exemplary embodiments of the present invention relate to a method and system for broadcast camera productions on location.

Outside broadcasting vans, also referred to herein as base stations or OB vans, are mobile studios used to produce radio and television media. Directors and other personnel stationed in the OB van can operate equipment remotely, including teleprompters and recording media, such as cameras and microphones. Communications may also be exchanged between personnel in the OB van, and operators of the recording media.

The signals and other communications may travel over specialized cables that connect the OB van and the remote equipment. Typically, the cables are triaxial or hybrid fiber. Triaxial cable is a type of electrical cable similar to coaxial cable. However, triaxial cable provides advantages over coaxial cable of safety and the rejection of interference. Hybrid fiber cables combine all video, audio, data, control, power, and other signals onto two single mode optical fibers and a few copper conductors in one jacket.

The OB vans and their recording equipment may use transmission systems that depend on the cables. Triaxial transmission systems may be used for communications over triaxial cable. Similarly, hybrid fiber transmission systems may be used for communications over hybrid fiber cable.

In many cases, temporary cables may be used to connect the base stations and the recording equipment. However, some facilities, such as concert halls and sports venues, may be pre-wired to facilitate the communications described above.

If a facility is wired with cabling that differs from the transmission system between the camera and the base station, a conversion box may be used to interface each of the base stations and the camera with the facility's cabling. Conversion boxes are also used to extend the cable length of triaxial cables by adding fibre cable which offers less attenuation and make longer connections possible.However, conversion boxes are very complex and expensive. The conversion boxes typically use power for their internal electronic circuits. Additionally, the conversion boxes may include a detection system to determine if the facility's cables differ from those used with the OB van's transmission system.

For example, Japanese Patent Application Publication No. 20060033848, by Koppe, et al., purports to disclose a video signal transceiver in which a camera and a base station become suitable for using an optical cable or a triaxial cable. The video signal transceiver includes a fiber-optical port, an optical receiver, a switch, and an optical transmitter. The optical receiver converts an optical video signal received by the fiber-optical port into a baseband video signal. The switch connects an output terminal of a demodulator or the optical receiver to a video signal line of a baseband port. The optical transmitter transmits, via the fiber-optical port, an optical control signal derived from a baseband control signal.

U.S. Patent No. 7,186,144, to Khemakhem, et al., purports to disclose a triaxial connector assembly including a media converter. The triaxial connector assembly is used to terminate a fiber optic/electrical hybrid cable. At one end, the triaxial connector assembly includes an interface to mate with a trixial connector. At another end, the triaxial connector assembly includes a cable termination end. The media converter is configured to convert fiber signals and electrical signals carried by a hybrid fiber optic/electrical cable to a coaxial signal carried forward by the triaxial interface. U.S. Patent Application Publication No. 20090191759, by Khemakhem, et al., discloses a similar assembly.

European Patent No. 1,617,651, to Koppe, et al., purports to disclose a video signal transceiver. The video signal transceiver has a triaxial port, a baseband port, a demodulator, at least one modulator. The demodulator converts a high frequency video signal received at the triaxial port into a baseband video signal for outputting at the baseband port. The modulator converts a baseband control signal received at the baseband port into a high frequency control signal for outputting at the triaxial port. The video signal transceiver may also include a fiber optical port, an optical receiver, a switch, and an optical transmitter. The optical receiver converts an optical video signal received at the fiber optical port into a baseband video signal. The switch connects either of the demodulator output or optical receiver to a video signal line of the baseband port. The optical transmitter transmits, via the fiber optical port, an optical control signal derived from the baseband control signal. U.S. Patent Application Publication No. 20060026660 also discloses the video signal transceiver of European Patent No. 1,617,651.

U.S. Patent Application Publication No. 20060055793, by Adler, et al., purports to disclose a remote-head imaging system with a camera control unit capable of supporting multiple input devices. The camera control unit detects a connected input device, and changes the camera control unit's internal functionality. The change to the camera control unit's functionality may include altering clock timing, changing video output parameters, and changing image processing software.

An improved method and system for interfacing base stations and recording equipment with cabling that does not match the transmission systems is desirable.

A system to process multimedia data according to the invention is set forth in claim 1. The system includes a base station and a conversion box. The base station is equipped and configured to generate a transmission signal comprising multimedia data. The transmission signal is based on a first cable. The base station is further equipped and configured to exchange the multimedia data with a signal source using the conversion box. The signal source is equipped and configured to generate the transmission signal based on the first cable. The conversion box is equipped and configured to connect the first cable to a second cable. The conversion box is configured to route the transmission signal to the second cable. The transmission signal is generated based on a signaling system for the second cable.

In an embodiment of the system, the system also includes a second conversion box and the multimedia device. The second conversion box is equipped and configured to send the multimedia data over a second cable, receive the multimedia data over the second cable, and generate a second signal comprising the multimedia data. The second signal is generated based on the signaling system for the second cable and the first transmission system. The second conversion box is also equipped and configured to to receive the signal over the second cable, derive the multimedia data from the signal, and send the second signal over the second cable. The multimedia device is equipped and configured to record and transmit the multimedia data to the base station using the second conversion box.

Another exemplary embodiment of the present invention provides a method to process multimedia data. The method includes generating a serial digital bit stream at a bit rate, based on the multimedia data. The method may also includes compressing the serial digital bit stream to a lower bit rate The method further includes packaging the compressed serial digital bit stream into a plurality of packets. Additionally, the method includes multiplexing the plurality of packets into a singular serial digital bit stream. Further, the method includes adding error correction to the singular serial digital bit stream. Also, the method includes transmitting the singular serial digital bit stream. Generating the serial digital bit stream is based on a transmission system for a first cable. The step of transmitting the singular serial digital bit stream is performed over a second cable.

Exemplary embodiments of the present invention are described with reference to the accompanying drawings. The described embodiments merely exemplify the invention. Plural possible modifications are apparent to the skilled person. The gist and scope of the present invention is defined in the appended claims of the present application.
Fig. 1A is a block diagram of a system for transmitting video data using triaxial cable.
Fig. 1B is a block diagram of a system for transmitting video data using hybrid fiber cable.
Fig 1C is a block diagram of a system for transmitting video data using triaxial cable, hybrid fiber cable, and a complex conversion box.
Fig. 2 is a block diagram of a system for transmitting video data using a simple conversion box, in accordance with exemplary embodiments of the present invention.
Fig. 3 is a block diagram of the simple conversion box for interfacing a triaxial transmission system with a hybrid fiber cable, in accordance with an exemplary embodiment of the present invention.
Fig. 4 is a block diagram of a conversion box for interfacing a hybrid fiber connector with a triaxial cable, in accordance with exemplary embodiments of the present invention.

In accordance with an exemplary embodiment of the present invention, a method and a system is provided for processing video data generated by a triaxial or hybrid transmission system, and transmitted over the other of a triaxial or hybrid fiber cable. Instead of converting the generated data from triaxial to fiber, or vice versa, signal processing may be used to make the video data suitable for transmission over the available cables. The base station and camera may be connected to the available cables using a connector or conversion box with the appropriate connectors.

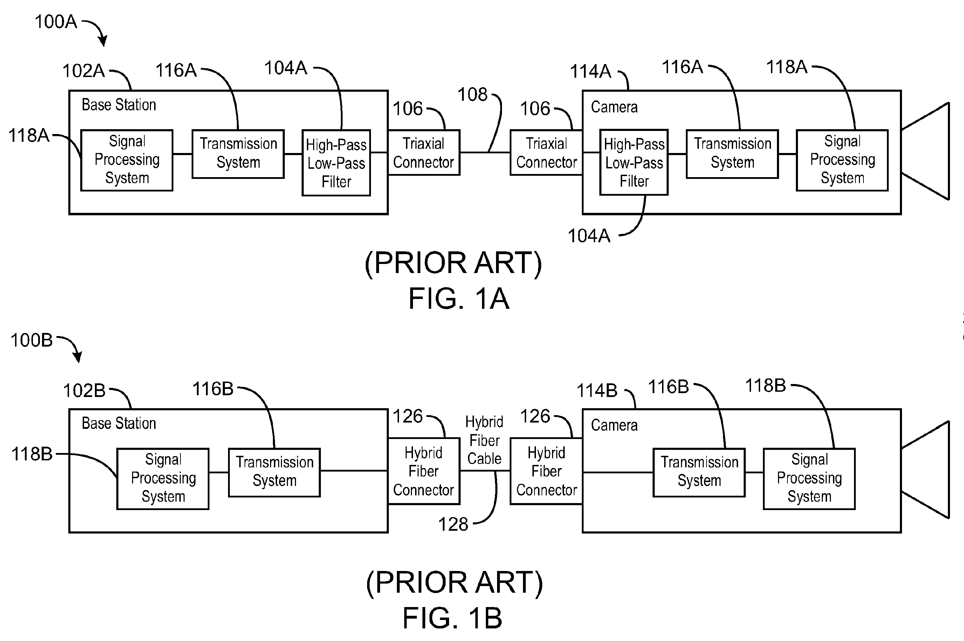

Fig. 1A is a block diagram of a system 100A for transmitting video data using triaxial cable 108. The system 100A may enable communications over the triaxial cable 108 between a base station 102A and a camera 114A that use a triax transmission system 116A. It should be noted that the camera 114A is merely an example of a signal source that may be used in the system 100A. Other signal sources, such as multimedia devices, may also be used in embodiments of the invention.

The base station 102A and the camera 114A may include signal processing systems 118A, triax transmission systems 116A, and high-pass/low-pass filters 104A. The base state 102A and the camera 114A may be connected to the triaxial cable 108 over triaxial connectors 106.

Fig. 1B is a block diagram of a system 100B for transmitting video data using hybrid fiber cable 128. The system 100B may enable communications over the hybrid fiber cable 128 between a base station 102B and a camera 114B that use hybrid fiber transmission system 116B.

The base station 102B and the camera 114B may include signal processing systems 118B and transmission systems 116B. The base station 102B and the camera 114B may be connected to the hybrid fiber cable 128 over hybrid fiber connectors 126.

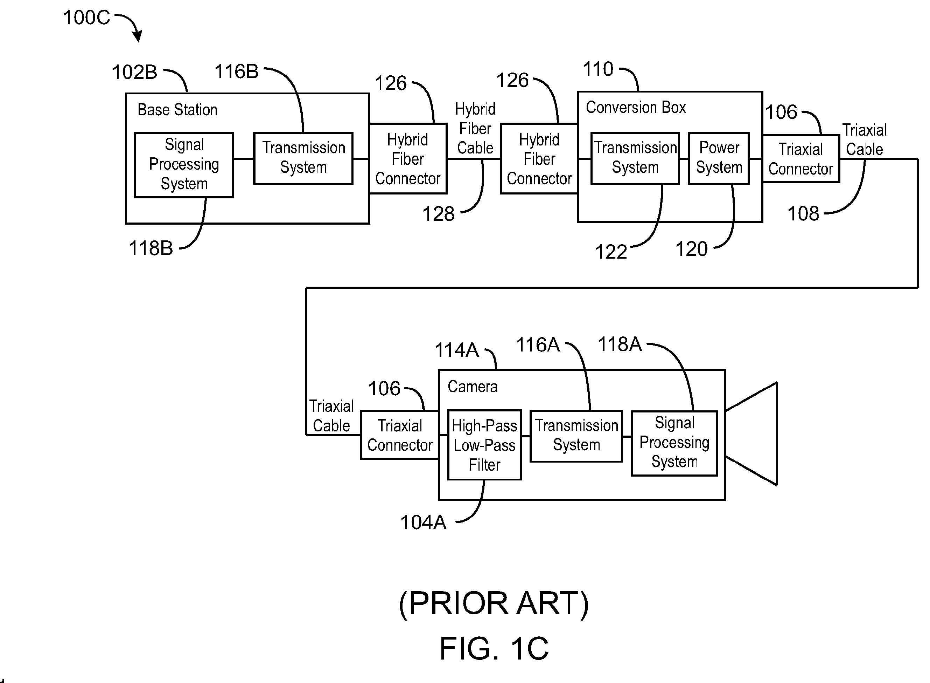

Fig 1C is a block diagram of a system 100C for transmitting video data using a complex conversion box 110. The complex conversion box 110 may be used to convert transmissions from hybrid fiber to triax, or vice versa.

The system 100C includes the base station 102B (with the hybrid fiber transmission system 116B), the complex conversion box 110, and the camera 102A (with the triax transmission system 116A). The base station 102B may include signal processing system 118B and transmission system 116B.

The base station 102B may be connected to the complex conversion box 110 over hybrid fiber cable 128 and hybrid fiber connectors 126. In contrast, the camera 114A may be connected to complex conversion box 110 over triaxial cable 108 and triaxial connectors 106.

The system 100C represents only one possible configuration using the complex conversion box 110, but other configurations are possible. For example, another complex conversion box 110 may connect the base station 102A (with the triax transmission system 116A) to the camera 114B (with the hybrid fiber transmission system 116B).

Additionally, two complex conversion boxes 110 may be used to connect a base station/camera using the same transmission system over a different cabling. For example, the base station 102A and the camera 114A may be connected over the hybrid fiber cable 128 through the use of two complex conversion boxes 110, each positioned between the base station 102A/camera 114A and the hybrid fiber cable 128.

The system 100 may enable communications over a triaxial cable 108 between a base station 102 and a camera 114 that use a triax transmission system 116. The system 100 may include the base station 102, high-pass/low-pass filters 104, triaxial connectors 106, the triaxial cable 108, and the camera 114. The triaxial connectors 106 may connect the high-pass/low-pass filters 104to the triaxial cable 108.

The base station 102 and the camera 114 may use triax transmission systems 116. Additionally, the base station 102 and the camera 114 may include signal processing systems 118, 118, respectively. In an exemplary embodiment of the invention, the camera 114 may generate video as a serial digital bit stream. Similar processing may be applied to other digital signals, such as audio, intercom, and control data. The signal processing system 118 may compress the serial digital bit stream to a lower bit rate than that of the generated serial digital bit stream.

The signal processing system 118B may then packetize and multiplex all digital signals into one serial digital bit stream. Additionally, the signal processing system 118B may add error correction to the one serial digital bit stream.

Further, the signal processing system 118B may modulate the serial digital bit stream with a digital modulation scheme to reduce the total bandwidth, and reduce the maximum signal frequency. The signal processing system 118B may then transmit the modulated signal over the high pass part of the high-pass/low-pass filter 104 of the camera 114. Advantageously, modulating the serial digital bit stream may lower the signal bandwidth and hence, the cable attenuation incurred when transmitting over the triaxial cable 108.

The base station 102A may transmit return signals to the camera 114A over the triaxial cable 108. The return signals may include data for viewfinder and teleprompter video, intercom, and control data. As such, the signal processing system 118A may perform processing on the return signals, similar to that described above for the signal processing system 118B, as described in the previous paragraph.

Typically, the complex conversion box 110 uses a power source, limiting its placement to areas with accessible power sources. Further, the complex conversion box 110 includes complex electronic circuits and software components for converting triaxial transmissions to hybrid fiber transmissions, and vice versa.

Advantageously, a simple conversion box may be used instead of the complex conversion box. The simple conversion box may simply route connections between triaxial and hybrid fiber cables, without a need for power or conversion components. The simple conversion box is thus cheaper, and can be placed in areas without regard to making power accessible. Further, the simple conversion box is more reliable and lighter, making transport easier than with the complex conversion box.

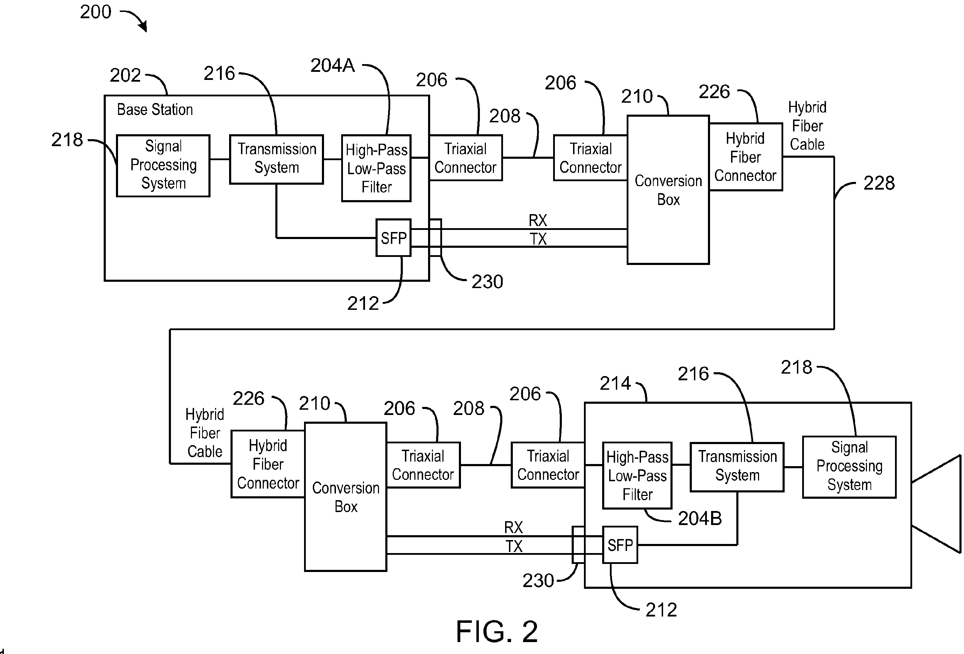

Fig. 2 is a block diagram of a system 200 for transmitting video data using simple conversion boxes, in accordance with exemplary embodiments of the present invention. The system 200 may enable communications over a hybrid fiber cable 228 between a base station 202 and a camera 214 that use triaxial transmission systems 216. The system 200 may include the base station 202, simple conversion boxes 210, the hybrid fiber cable 228, and the camera 214.

Similar to the base station 102A described with reference to Fig. 1A, the base station 202 may include a signal processing system 218, triaxial transmission system 216, and a high-pass low-pass filter 204A. The base station 202 may also include a small form-factor pluggable transceiver 212, abbreviated herein as SFP.

Similar to the camera 114A described with reference to Fig. 1A, the camera 214 in Fig 2 may include a signal processing system 218, transmission system 216, and a high-pass low-pass filter 204B. The camera 214 may also include the SFP 212. Both the base station 202 and the camera 214 may be connected to the simple conversion boxes 210 over triaxial connectors 206 and triaxial cable 208.

The camera 214 may generate video as a serial digital bit stream. The signal processing system 218 may compress the serial digital bit stream to a lower bit rate than that of the generated serial digital bit stream.

The signal processing system 218 may then packetize and multiplex all digital signals into one serial digital bit stream. Additionally, the signal processing system 218 may add error correction to the one serial digital bit stream. However, the serial digital bit stream may not be modulated. This may be the only difference between triax and hybrid fiber regarding signal processing.

In an exemplary embodiment of the invention, the serial digital bit stream may be connected to the transmitter TX part of the SFP 212. It should be noted that the SFP 212 is merely an example of an electro/optical device that may be used in embodiments of the invention. Other electro/optical transceiver devices may be used in alternative embodiments of the invention.

The optical output signal of the SFP 212 may be connected to a fiber contact at the camera 214. There may also be a fiber contact from the camera connected to the receiver RX part of the SFP 212. The SFP 212 may convert optical serial digital signals received from the base station 202 to an electrical signal. This electrical signal may be de-embedded and processed to make the electrical signal available in the camera 214.

The camera 214 draws power supplied by the base station 202 over the triaxial cable 208. More specifically, the base station 202 may provide the power for the camera over the low-pass part of its high-pass/low-pass filter 204A. The conversion boxes 210 may combine signal and power on hybrid fiber cable 228. Accordingly, the camera 214 may draw power over the low-pass part of the high-pass/low-pass filter 204B.

At the base station side of the system 200, two optical connectors 230 may be mounted near a triaxial connector. The optical connectors may be connected, via optical wires, to the RX and TX optical contacts of the SFP 212. The optical and triaxial connectors may be located at the base station 202 or via appropriate cables at a patch panel. The internal interconnections of the simple conversion box 210 at the base station side are the same as in the camera side of the system 200, with the power to the camera 214 being supplied from the base station 202 over the triaxial connector.

In some circumstances, technical limitations may not provide the connectors for a simple conversion box to connect to standard triaxial and hybrid fiber connectors 206, 226. In such circumstances, the simple conversion box 210 may be connected to the base station 202 or the camera 214. Additionally, a complex conversion box 110 may be connected to the other of the base station 202 or the camera 214.

For example, referring to Figs. 1C and 2, the base station 202 and simple conversion box 210 may substitute for the base station 102B in Fig. 1C. In such a configuration, the hybrid fiber connector 226 from the simple conversion box 210 may connect to the hybrid fiber connector 126 of the complex conversion box 110. Similar configurations are also possible using triax/hybrid, and at the camera side of such systems.

In certain cases, the hybrid fiber cable 228 may include a segment of dark fiber. The dark fiber may not include power cores used to carry power to the camera 214. As such, the camera 214 may be powered by a power unit proximate to the camera 214.

In one embodiment of the invention, the power unit may be located at the change-over from dark fiber to hybrid fiber in the camera direction. The power unit may be similar to the typical power unit used in the base station 202. In such a case, the simple conversion box 210 may be omitted from the base station side of the system 200.

Advantageously, this solution would save the need of a complex conversion box for modulation and de-modulation of the high definition digital transmission, Additionally, the SFP modules may be able to process also handle uncompressed 4.5G, with more expensive SFP modules, and be able to interface with a standard fiber system without compression of the multimedia data.

Similar to the base station 202, at the camera side, the simple conversion box 210 could be removed by adding 2 optical fiber connections to the camera 214.

In one embodiment of the invention, the simple conversion box 210 could be removed at just one side (camera or base station), depending on the specific application. As such, different configurations of simple conversion boxes could be used.

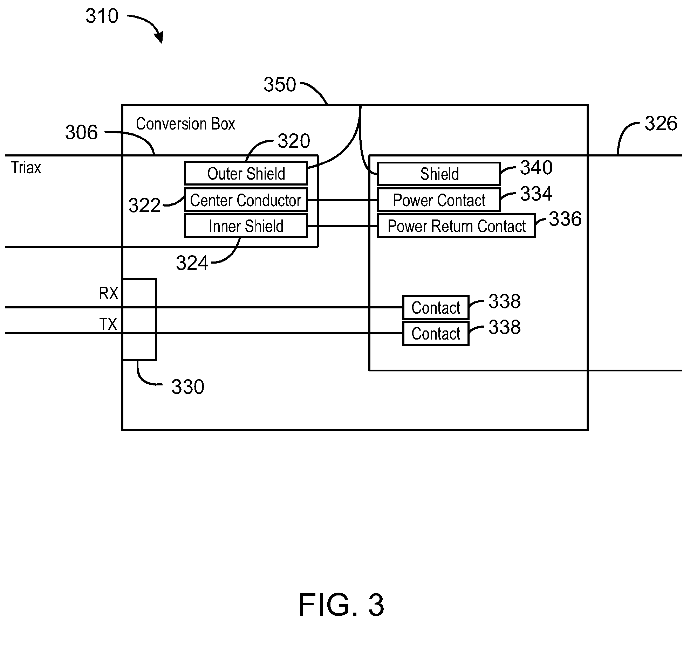

Fig. 3 is a block diagram of a simple conversion box 310 for interfacing a base station 202 containing a triaxial transmission system 216 with a hybrid fiber cable 228, in accordance with an exemplary embodiment of the present invention. The simple conversion box 310 may include a housing 350, a triaxial connector 306 and optical connectors 330, at one side, and a hybrid fiber connector 326 at the other side.

The hybrid fiber connector 326 may include a shield 340, a power contact 334, a power return contact 336, and multiple optical contacts 338. The optical connectors 330 inside the simple conversion box 310 may be connected to the optical contacts 338 in the hybrid fiber connector 326. In this manner, serial digital signals may be exchanged between the hybrid fiber cable 228 and the camera 214.

The triaxial connector 306 may include an outer shield 320, a center conductor 322, and an inner shield 324. The center conductor 322 from the triaxial connector 306 may be connected with the power contact 334 from the hybrid fiber connector 326. The inner shield 324 from the triaxial connector 306 may be connected to the power return contact 336 of the hybrid fiber connector 326. The outer shield 320 from the triaxial connector 306 may be connected with both the housing 350 of the simple conversion box 310 and the shield 340 from the hybrid fiber connector 326. In this configuration, power may be transferred from the electrical power wires in the hybrid fiber cable 328 to the camera 214.

Referring back to Fig. 2, in another embodiment of the invention, hybrid fiber connectors 226 may be used in place of the triaxial and optical connectors of the base station 202 and the camera 214. In such an embodiment, the power to the camera 214 may be on the power contact 334 and power return contact 336 within the hybrid fiber connector 226. Additionally, the serial digital signals may be transmitted via the optical contacts 338 of the hybrid fiber connector 226.

Hybrid fiber connectors may also be used where a venue is pre-wired with a triaxial cable 208. In such a scenario, a conversion box 410 may be used to connect the hybrid fiber connectors to the triaxial cable 208.

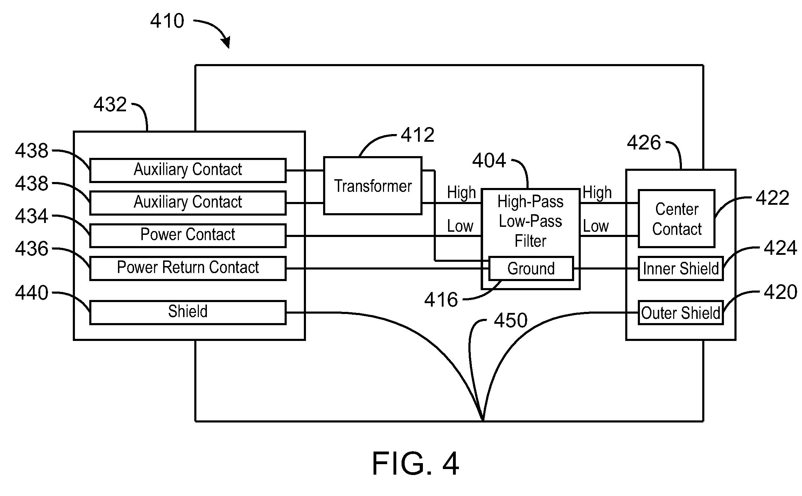

Fig. 4 is a block diagram of the conversion box 410 for interfacing a hybrid fiber connector 432 with a triaxial cable 408, in accordance with exemplary embodiments of the present invention. The conversion box 410 may include a housing 450, the hybrid fiber connector 432, a transformer, a triaxial connector 426, and a high-pass/low-pass filter 404.

Like the hybrid fiber connector 326 described with reference to Fig. 3, the hybrid fiber connector 432 may include a power contact 434, a power return contact 436, and a shield 440. The hybrid fiber connector 432 may also include two auxiliary contacts 438, described in greater detail below. However, because the conversion box 410 is not used for optical transmission, the hybrid fiber connector 432 may or may not include optical contacts.

The modulated electrical signal from the base station 202 or the camera 214 may be connected to one of the auxiliary contacts 438. The signal return line from the base station 202 or the camera 214 may be connected to the other auxiliary contact 438.

The triaxial connector 426 may include a center conductor 422, an inner shield 424, and an outer shield 420. The power contact 434 of the hybrid fiber connector 432 may be connected via the low pass part of the high pass/low pass filter 404 with the center conductor 422 of the triaxial connector 426. The power return contact 436 may be connected via the earth of the high-pass/low-pass filter 404 with the inner shield 424 of the triaxial connector 426.

Both auxiliary contacts 438 from the hybrid fiber connector 432 may be connected to each other via a primary side of the transformer 412. The transformer 412 may be a balanced-unbalanced, i.e., impedance, transformer.

The secondary side of the transformer 412 may include two contacts. One contact of the secondary side may be connected via the high pass part of the high pass/low pass filter 404 to the center conductor 422 of the triaxial connector 426. The other secondary side contact may be connected via the ground of the high pass/low pass filter 404 to the inner shield 424 of the triaxial connector 426.

Similar to the simple conversion box 310 described with reference to Fig. 3, the shield 440 of the hybrid fiber connector 432 may be connected via the housing 450 to the outer shield 420 of the triaxial connector 426.

In another embodiment of the invention, the power contact 434, and the power return contact 436 may be used instead of the auxiliary contacts 438. Additionally, the high pass/low pass filter 404 may be located inside the camera 214 and the base station 202, instead of inside the conversion box 410.

In an exemplary embodiment of the invention, an automatic detection of the cable type may be performed by monitoring the optical and electrical signal level that is received by the base station 202. An amplitude measurement on the received signal may be used to distinguish a connected hybrid fiber cable 228 or optical connection to optical contacts 230 from a triaxial cable 208.

If field programmable gate arrays or erasable programmable logic devices are used for the signal processing, these programmable logic devices may be loaded with 2 different configurations: one for triaxial and one for fiber. Advantageously, logic resources in the FPGA that are specific for fiber or triaxial may be saved, resulting in lower power consumption. Further, the savings in logic resources allows use of a field programmable gate array smaller than a typical field programmable gate array.

In another exemplary embodiment of the invention, the automatic detection of the cable type and the switching between 2 programmable configurations for fiber and triaxial may be combined. The configuration for triaxial may be extended with a signal / level detection for fiber.

The configuration for fiber may be extended with a signal / level detection for triaxial. If the configuration for triaxial is loaded in the field programmable gate array and a fiber signal is detected but not a triaxial signal, the field programmable gate array reconfiguration can be started by loading the fiber configuration. Similarly, if the configuration for fiber is loaded in the field programmable gate array and a triaxial signal is detected but no fiber signal, the field programmable gate array reconfiguration can be started for loading the triaxial configuration.

In such an embodiment, two separate optical contacts may be used for the transmit signal and receive signal. This can also be combined with a Wavelength Division Multiplexer, in order to have a single optical contact and to use one fiber instead of two.

In another embodiment, both types of connectors, triaxial and hybrid fiber, may be installed at the camera 214 or the base station 202. In such an embodiment, the corresponding base station 202 or camera 214 may also include both transmission systems. Further, such a base station 202 or camera 214 may include a circuit to automatically switch off the power to the connector that is not used. This may prevent shocks from contact with an unused connector. Alternatively, an embodiment may include a mechanical protection, such as a plate that covers the unused connector.

The skilled person will appreciate that combining any of the above-recited features of the present invention together may be desirable.

## Claims

1. A system (200) for processing multimedia data, comprising:
a base station (202) equipped and configured to:
generate a transmission signal comprising multimedia data, wherein the transmission signal is based on a first cable (208, 228); and
exchange the multimedia data with a signal source (214) using a conversion box (210, 310, 410), wherein the signal source (214) is equipped and configured to generate the transmission signal based on the first cable;
the conversion box (210, 310, 410) equipped and configured to connect the first cable (208, 228) to a second cable (208, 228);
the system (200) **characterized in that**:
the conversion box (210, 310, 410) is configured to route the transmission signal to the second cable (208, 228), wherein the transmission signal is generated based on a signal processing system (218) for the second cable (208, 228).

2. The system (200) of claim 1, wherein the first cable is a triaxial cable (208), and wherein the second cable is a hybrid fiber cable (228).

3. The system (200) of claim 1, wherein the first cable is a hybrid fiber cable (228), and wherein the second cable is a triaxial cable (208).

4. The system (200) of claim 1, wherein the conversion box (210, 310) comprises:
a housing (350);
a triaxial connector (306) comprising:
an outer shield (320);
a center conductor (322); and
an inner shield (324);
two optical connectors (330) and
a hybrid fiber connector (326) comprising:
a shield (340);
a power contact (334);
a power return contact (336);
a first optical contact (338); and
a second optical contact (338).

5. The system (200) of claim 2, wherein the base station (202) comprises a small form-factor pluggable transceiver (212) comprising:
an RX optical contact (230); and
a TX optical contact (230).

6. The system (200) of claim 2, wherein:
the outer shield (320) is connected to the housing (350);
the shield (340) is connected to the housing (350);
the center conductor (322) is connected to the power contact (334);
the inner shield (324) is connected to the power return contact (336);
the first optical contact (338) is connected to an RX optical contact (330); and
the second optical contact (338) is connected to a TX optical contact (330).

7. The system (200) of claim 1, wherein the base station comprises:
a hybrid fiber connector (226); and
a triaxial connector (206), wherein the base station is equipped and configured to generate a transmission based on the second cable, and wherein if the second cable is a triaxial cable (208), the system (200) is configured to prevent power from passing through the hybrid fiber connector (226).

8. The system (200) of claim 1, comprising a second conversion box (210, 410) that connects the second cable to a camera (214).

9. A system (200) for processing multimedia data, comprising:
a camera (214) equipped and configured to:
generate a transmission signal comprising multimedia data, wherein the transmission signal is based on a first cable (208, 228); and
exchange the multimedia data with a base station (202) using a conversion box (210, 410), wherein the signal source (202) is equipped and configured to generate the transmission signal based on the first cable;
the conversion box (210, 410) equipped and configured to connect the first cable (208, 228) to a second cable (208, 228);
the system (200) **characterized in that**:
the conversion box (210, 410) is configured to route the transmission signal to the second cable (208, 228), wherein the transmission signal is generated based on a signal processing system (218) for the second cable (208, 228).

10. The system (200) of claim 9, wherein the camera (214) comprises:
a hybrid fiber connector (226); and
a triaxial connector (206), wherein the camera (214) is equipped and configured to generate a transmission based on the second cable; and wherein if the second cable is a triaxial cable (208), the system (200) is configured to prevent power from passing through the hybrid fiber connector (226), and wherein if the second cable is a hybrid fiber cable (228), the system is configured to prevent power from passing through the triaxial connector (206).

11. The system (200) of claim 10, comprising an automated detection system configured to determine whether the second cable is a triaxial cable (208) or a hybrid fiber cable (228).

12. The system (200) of claim 9, wherein the signal comprises:
a coded orthogonal frequency-division multiplexing (COFDM) signal; or
another method of digital modulation.

13. The system (200) of claim 9, comprising a complex conversion box (110), wherein the conversion box connects to the complex conversion box (110), and the complex conversion box (110) connects the second cable to the camera (214).

14. A method for processing multimedia data, comprising:
to generate a serial digital bit stream at a bit rate, based on the multimedia data;
to compress the serial digital bit stream to a lower bit rate than the bit rate;
to package the compressed serial digital bit stream into a plurality of packets;
to multiplex the plurality of packets into a singular serial digital bit stream;
to add error correction to the singular serial digital bit stream; and
to transmit the singular serial digital bit stream;
the method **characterized in that** the step of generating the serial digital bit stream is based on a transmission system for a first cable; and
the step of transmitting the singular serial digital bit stream is performed over a second cable.

15. The method of claim 14, wherein to transmit the singular digital bit stream comprises transmitting a modulated singular serial digital bit stream, wherein a total bandwidth of the modulated singular serial digital bit stream is reduced.
